# EUROPEAN PATENT SPECIFICATION

(11) **EP 4 177 073 B1**
(45) Date of publication and mention of the grant of the patent: **26.02.2025**
(21) Application number: 22199919.6
(22) Date of filing: 06.10.2022
(51) Int. Cl.: B60C 1/00, C08L 7/00, C08L 9/00, C08L 9/06

(54) **TIRE RUBBER COMPOSITION AND PNEUMATIC TIRE**
REIFENGUMMIZUSAMMENSETZUNG UND LUFTREIFEN
COMPOSITION DE CAOUTCHOUC POUR PNEUMATIQUE ET PNEUMATIQUE

(30) Priority: 09.11.2021 JP 2021182756
(43) Date of publication of application: 10.05.2023
(73) Proprietor: Sumitomo Rubber Industries, Ltd., Kobe-shi, Hyogo 651-0072 (JP)
(72) Inventor: TAKEBE, Asaka, Kobe-shi, Hyogo, 651-0072 (JP)
(74) Representative: Manitz Finsterwald Patent- und Rechtsanwaltspartnerschaft mbB

(56) References cited:
- EP-A1- 3 533 828
- EP-A1- 3 722 361

## Description

### TECHNICAL FIELD

The present invention relates to a tire rubber composition and a pneumatic tire including the tire rubber composition.

### BACKGROUND ART

In recent years, from safety and other standpoints, it has become desirable to improve grip performance of automobile tires and especially wet grip performance at low temperatures.

### SUMMARY OF INVENTION

### TECHNICAL PROBLEM

The present invention aims to solve the above problem and provide a tire rubber composition providing excellent wet grip performance at low temperatures and a pneumatic tire including the tire rubber composition.

### SOLUTION TO PROBLEM

The present invention relates to a pneumatic tire, including a tire component formed from a tire rubber composition, the tire rubber composition containing: at least one rubber component; at least one silica; and at least one compound represented by the following formula (I): 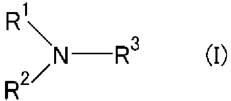 wherein R¹ represents a hydrocarbon group; and R² and R³ are the same or different and each represent a hydrogen atom, a hydrocarbon group, or a -(AO)ₙ-H group where n represents an integer of 1 or larger, n for R² and n for R³ may be the same as or different from each other, and each AO is the same or different and represents an oxyalkylene group having 2 or more carbon atoms, and at least one of R² or R³ is a - (AO)ₙ-H group, the tire rubber composition having an acetone extractable content of not lower than 16.0% by mass.

### ADVANTAGEOUS EFFECTS OF INVENTION

The tire rubber composition according to the present invention contains a rubber component, a silica, and a compound of formula (I), and has an acetone extractable content of not lower than 16.0% by mass. Thus, the tire rubber composition provides improved wet grip performance at low temperatures.

### DESCRIPTION OF EMBODIMENTS

The tire rubber composition of the present invention contains a rubber component, a silica, and a compound of formula (I), and has an acetone extractable content of not lower than 16.0% by mass.

The reason why the rubber composition provides the above-mentioned advantageous effect is believed to be as follows.

The compound of formula (I) is adsorbed on the silica surface, so that the silica is hydrophobized and allowed to disperse well in the rubber. This prevents formation of large silica domains and thereby provides flexibility to the rubber, resulting in good conformity.

At the same time, as the silica is dispersed, a fine silica-polymer network is formed. Thus, when the amount of plasticizer components (AE) entering the network is increased, the fine mobility of the polymer is improved so that it has higher mobility even at low temperatures. Thus, conformity at low temperatures is further improved, and energy loss due to the friction between the silica and polymer is more likely to occur.

The above mechanism of action is believed to improve wet grip performance at low temperatures.

The acetone extractable content (AE) of the rubber composition is not lower than 16.0% by mass, preferably not lower than 19.0% by mass, more preferably not lower than 21.0% by mass, still more preferably not lower than 22.0% by mass, particularly preferably not lower than 24.0% by mass. The upper limit is not limited, but is preferably not higher than 33.0% by mass, more preferably not higher than 30.0% by mass, still more preferably not higher than 28.0% by mass, particularly preferably not higher than 27.0% by mass. When the AE is within the range indicated above, the advantageous effect tends to be better achieved.

Here, the acetone extractable content (AE) is determined by measuring the vulcanized rubber composition (sample) by a method of measuring the acetone extractable content in accordance with JIS K 6229:2015 (unit: % by mass based on the vulcanized rubber composition (sample)).

The AE can be controlled by methods known to those skilled in the art. For example, the AE tends to increase as the amount of plasticizers such as oils in the rubber composition increases.

The rubber composition contains one or more rubber components.

The rubber components in the rubber composition contribute to crosslinking and are generally polymers having a weight average molecular weight (Mw) of 10,000 or more.

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Any rubber component may be used including those known in the tire field. Examples include diene rubbers such as isoprene-based rubbers, polybutadiene rubbers (BR), styrene-butadiene rubbers (SBR), acrylonitrile-butadiene rubbers (NBR), chloroprene rubbers (CR), butyl rubbers (IIR), and styrene-isoprene-butadiene copolymer rubbers (SIBR). Each of these rubbers may be used alone, or two or more of these may be used in combination. Among these, isoprene-based rubbers, BR, and SBR are preferred to better achieve the advantageous effect. More preferably, the rubber components include at least an isoprene-based rubber.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used including, for example, those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

When the rubber composition contains one or more isoprene-based rubbers, the amount of isoprene-based rubbers based on 100% by mass of the rubber component content is preferably 5% by mass or more, more preferably 20% by mass or more, still more preferably 40% by mass or more, particularly preferably 50% by mass or more, but is preferably 80% by mass or less, more preferably 70% by mass or less, still more preferably 65% by mass or less, particularly preferably 60% by mass or less. When the amount is within the range indicated above, the advantageous effect tends to be better achieved.

The reason why the inclusion of isoprene-based rubbers provides the above-mentioned advantageous effect is believed to be as follows.

When isoprene-based rubbers are included, it is considered that due to their rubber strength, the strength (M100) upon large deformation is increased, thereby resulting in good handling stability.

Any BR may be used, and examples include those commonly used in the tire industry, including: high cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). Each of these types of BR may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the rubber composition contains BR, the amount of BR based on 100% by mass of the rubber component content is preferably 5% by mass or more, more preferably 15% by mass or more, still more preferably 30% by mass or more, particularly preferably 60% by mass or more, but is preferably 90% by mass or less, more preferably 80% by mass or less, still more preferably 75% by mass or less, particularly preferably 70% by mass or less. When the amount is within the range indicated above, the advantageous effect tends to be better achieved.

Any SBR may be used including, for example, emulsion-polymerized styrene-butadiene rubbers (E-SBR) and solution-polymerized styrene-butadiene rubbers (S-SBR). Examples of commercial products include those available from Sumitomo Chemical Co., Ltd., JSR Corporation, Asahi Kasei Corporation, Zeon Corporation, etc.

The glass transition temperature (Tg) of the SBR is preferably lower than -50°C, more preferably not higher than -55°C, still more preferably not higher than -58°C, particularly preferably not higher than -60°C. The lower limit of the glass transition temperature is preferably not lower than -78°C, more preferably not lower than -75°C, still more preferably not lower than -72°C, particularly preferably not lower than -70°C.

Herein, the glass transition temperature of the SBR is measured by differential scanning calorimetry (DSC) at a rate of temperature increase of 10°C/min in accordance with JIS K7121.

The reason for this advantageous effect is believed to be as follows.

When SBR having a low Tg is used, it is believed that the Tg of the rubber compound is reduced so that the rubber exhibits good conformity even in a low temperature range and, further, heat build-up is more likely to occur due to the presence of a styrene portion, as a result of which wet grip performance at low temperatures is improved.

The styrene content of the SBR is preferably 5% by mass or higher, more preferably 8% by mass or higher, still more preferably 10% by mass or higher. The styrene content is preferably 50% by mass or lower, more preferably 35% by mass or lower, still more preferably 22% by mass or lower. When the styrene content is within the range indicated above, the advantageous effect tends to be better achieved.

Herein, the styrene content of the SBR is determined by ¹H-NMR analysis.

The vinyl content of the SBR is preferably 10% by mass or higher, more preferably 20% by mass or higher, still more preferably 30% by mass or higher. A vinyl content of lower than 10% by mass may fail to provide sufficient wet grip performance. The vinyl content is preferably 90% by mass or lower, more preferably 80% by mass or lower, still more preferably 70% by mass or lower. A vinyl content of higher than 90% by mass may impair the strength.

Herein, the vinyl content (1,2-butadiene unit content) of the SBR can be measured by infrared absorption spectrometry.

When the rubber composition contains SBR, the amount of SBR based on 100% by mass of the rubber component content is preferably 5% by mass or more, more preferably 25% by mass or more, still more preferably 40% by mass or more, particularly preferably 50% by mass or more, but is preferably 90% by mass or less, more preferably 80% by mass or less, still more preferably 70% by mass or less, particularly preferably 65% by mass or less. When the amount is within the range indicated above, the advantageous effect tends to be better achieved.

The rubber components may be either oil extended rubbers prepared by oil extension or resin extended rubbers prepared by resin extension. These may be used alone or in combinations of two or more. Oil extended rubbers are preferred among these.

Here, the oils used in the oil extended rubbers and the resins used in the resin extended rubbers are as described later for the plasticizers. Moreover, the oil content of the oil extended rubbers and the resin content of the resin extended rubbers are not limited but are each usually about 10 to 50 parts by mass per 100 parts by mass of the rubber solids content.

The rubber components may be modified to introduce therein a functional group interactive with filler such as silica.

Examples of the functional group include a silicon-containing group (-SiR₃ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. A silicon-containing group is preferred among these. More preferred is -SiR₃ where each R is the same or different and represents a hydrogen atom, a hydroxy group, a hydrocarbon group (preferably a C1-C6 hydrocarbon group, more preferably a C1-C6 alkyl group) or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition contains silica as a filler.

Examples of silica include dry silica (anhydrous silicic acid) and wet silica (hydrous silicic acid). Wet silica is preferred because it has a large number of silanol groups. The raw material of the silica may be water glass (sodium silicate) or a biomass material such as rice husks. Usable commercial products are available from Evonik Degussa, Tosoh Silica Corporation, Solvay Japan, Ltd., Tokuyama Corporation, etc. Each of these types of silica may be used alone, or two or more of these may be used in combination.

The average primary particle size of the silica is preferably 25 nm or less, more preferably 20 nm or less, still more preferably 16 nm or less, particularly preferably 14 nm or less. The lower limit of the average primary particle size is not limited, but is preferably 3 nm or more, more preferably 5 nm or more, still more preferably 7 nm or more. When the average primary particle size is within the range indicated above, handling stability and fuel economy tend to be suitably achieved.

Here, the average primary particle size of the silica can be determined by measuring the particle sizes of at least 400 primary particles of the silica observed in the visual field of a transmission or scanning electron microscope and averaging them.

The reason for this advantageous effect is believed to be as follows.

When silica having a smaller average primary particle size, in particular, silica having a fine particle size of 16 nm or less is used, it is considered that as the surface area of the silica is increased, energy loss due to the friction between the silica and polymer is more likely to occur. Accordingly, it is believed that wet grip performance at low temperatures is significantly improved.

The amount of silica per 100 parts by mass of the rubber component content is preferably 50 parts by mass or more, more preferably 60 parts by mass or more, still more preferably 70 parts by mass or more, particularly preferably 80 parts by mass or more, but is preferably 150 parts by mass or less, more preferably 120 parts by mass or less, still more preferably 100 parts by mass or less, particularly preferably 95 parts by mass or less. When the amount is within the range indicated above, the advantageous effect tends to be better achieved.

The reason why adjusting the amount of silica to a predetermined amount or more provides the above-mentioned advantageous effect is believed to be as follows.

It is considered that the larger the amount of silica, the more likely the energy loss due to the friction between the silica and polymer is to occur. It is also considered that the larger the amount of fillers, the greater the effect of the compound of formula (I) in improving dispersion. Accordingly, it is believed that wet grip performance at low temperatures is significantly improved.

Examples of usable fillers other than silica include inorganic fillers other than silica and carbon black. Examples of inorganic fillers other than silica include clay, alumina, talc, calcium carbonate, magnesium carbonate, aluminum hydroxide, magnesium hydroxide, magnesium oxide, and titanium oxide. These may be used alone or in combinations of two or more. Carbon black is preferred among these.

Non-limiting examples of carbon black include N134, N110, N220, N234, N219, N339, N330, N326, N351, N550, and N762. The raw material of the carbon black may be a biomass material such as lignin or a plant oil. Moreover, the carbon black may be produced either by burning such as the furnace process or by hydrothermal carbonization (HTC). Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area (N₂SA) of the carbon black is preferably 50 m²/g or more, more preferably 70 m²/g or more, still more preferably 90 m²/g or more. The N₂SA is also preferably 200 m²/g or less, more preferably 150 m²/g or less, still more preferably 130 m²/g or less. When the N₂SA is within the range indicated above, the advantageous effect tends to be better achieved.

Here, the nitrogen adsorption specific surface area of the carbon black is determined in accordance with JIS K6217-2:2001.

The amount of carbon black per 100 parts by mass of the rubber component content is preferably 1 part by mass or more, more preferably 3 parts by mass or more, still more preferably 5 parts by mass or more, but is preferably 100 parts by mass or less, more preferably 50 parts by mass or less, still more preferably 30 parts by mass or less, particularly preferably 10 parts by mass or less. When the amount is within the range indicated above, the advantageous effect tends to be better achieved.

The amount of fillers (the combined amount of silica, carbon black, and other fillers) per 100 parts by mass of the rubber component content is preferably 50 parts by mass or more, more preferably 60 parts by mass or more, still more preferably 70 parts by mass or more, particularly preferably 80 parts by mass or more, but is preferably 160 parts by mass or less, more preferably 130 parts by mass or less, still more preferably 110 parts by mass or less, particularly preferably 105 parts by mass or less. When the amount is within the range indicated above, the advantageous effect tends to be better achieved.

The present invention uses at least one compound represented by the formula (I) below. Here, the compound of formula (I) may be a single compound or a combination of two or more compounds.

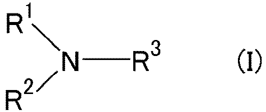

In formula (I), R¹ represents a hydrocarbon group; and R² and R³ are the same or different and each represent a hydrogen atom (-H), a hydrocarbon group, or a -(AO)ₙ-H group where n represents an integer of 1 or larger, n for R² and n for R³ may be the same as or different from each other, and each AO is the same or different and represents an oxyalkylene group having 2 or more carbon atoms, and at least one of R² or R³ is a -(AO)ₙ-H group.

The hydrocarbon group for R¹ to R³ may be linear, branched, or cyclic, and examples include aliphatic hydrocarbon groups, alicyclic hydrocarbon groups, and aromatic hydrocarbon groups, among which aliphatic hydrocarbon groups are preferred. The number of carbon atoms of the hydrocarbon group is preferably 1 or more, more preferably 5 or more, still more preferably 8 or more, particularly preferably 12 or more, but is preferably 30 or less, more preferably 25 or less, still more preferably 22 or less, particularly preferably 20 or less. When the number of carbon atoms is within the range indicated above, the advantageous effect tends to be more suitably achieved.

Examples of aliphatic hydrocarbon groups include alkyl, alkylene, alkenyl, alkenylene, alkynyl, and alkynylene groups. Alkyl groups having the above-mentioned number of carbon atoms are preferred among these. Examples of alkyl groups include methyl, ethyl, n-propyl, isopropyl, n-butyl, isobutyl, sec-butyl, tert-butyl, pentyl, hexyl, heptyl, 2-ethylhexyl, octyl, nonyl, decyl, undecyl, dodecyl, tridecyl, tetradecyl, pentadecyl, and octadecyl groups.

Preferred examples of alicyclic hydrocarbon groups include C3-C8 alicyclic hydrocarbon groups. Specific examples include cyclopropyl, cyclobutyl, cyclopentyl, cyclohexyl, cycloheptyl, cyclooctyl, cyclopropenyl, cyclobutenyl, cyclopentenyl, cyclohexenyl, cycloheptenyl, and cyclooctenyl groups.

Preferred examples of aromatic hydrocarbon groups include C6-C10 aromatic hydrocarbon groups. Specific examples include phenyl, benzyl, phenethyl, tolyl, xylyl, and naphthyl groups. Here, the tolyl or xylyl group may have a methyl substituent(s) at any of the ortho, meta, and para positions of the benzene ring.

Each AO in the -(AO)ₙ-H group (where n represents an integer of 1 or larger and n for R² and n for R³ may be the same as or different from each other) for R² and R³ is the same or different and represents an oxyalkylene group having 2 or more carbon atoms. The number of carbon atoms is preferably 3 or more. The upper limit is not limited, but is preferably 7 or less, more preferably 6 or less, still more preferably 5 or less. When the number of carbon atoms is within the range indicated above, the advantageous effect tends to be more suitably achieved.

The alkylene group A in the oxyalkylene group AO may be either linear or branched.

To more suitably achieve the advantageous effect, AO is preferably a group in which a branched chain R⁴ (where R⁴ represents a hydrocarbon group) is bound to a C2-C3 oxyalkylene group (an oxyethylene group (EO), an oxypropylene group (PO)). The -(AO)ₙ-H group is more preferably a group represented by the formula (A) or (B) below, still more preferably a group of formula (A). Moreover, the branched chain R⁴ is preferably bound to the carbon atom adjacent to an oxygen atom.

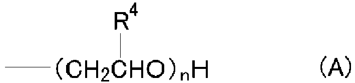

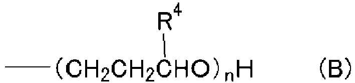

In formulas (A) and (B), R⁴ represents a hydrocarbon group, and n is as defined for the -(AO)ₙ-H group.

Examples of the hydrocarbon group as R⁴ include those as described for the hydrocarbon groups for R¹ to R³. Aliphatic hydrocarbon groups are preferred among these, with alkyl groups being more preferred. The number of carbon atoms of the hydrocarbon group, preferably aliphatic hydrocarbon group, more preferably alkyl group, is preferably 1 or more, more preferably 2 or more, but is preferably 6 or less, more preferably 5 or less, still more preferably 4 or less, particularly preferably 3 or less. When the number of carbon atoms is within the range indicated above, the advantageous effect tends to be more suitably achieved.

When (AO)ₙ includes two or more types of oxyalkylene groups, the oxyalkylene groups may be arranged blockwise or randomly.

The symbol n represents the number of moles of AO added and is preferably 1 or larger, more preferably 2 or larger, but is preferably 20 or smaller, more preferably 16 or smaller, still more preferably 10 or smaller, particularly preferably 5 or smaller, most preferably 3 or smaller. When the number is within the range indicated above, the advantageous effect tends to be more suitably achieved.

In formula (I), at least one of R² or R³ is a -(AO)ₙ-H group. More preferably, R² and R³ are all -(AO)ₙ-H groups. In other words, the compound of formula (I) is still more preferably a compound represented by the following formula (I-1). In this case, the advantageous effect tends to be more suitably achieved.

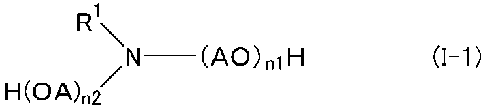

In formula (I-1), the symbols are as defined in formula (I), except that n1 and n2 each represent an integer of 1 or larger (an integer as defined for n).

In formula (I) and formula (I-1), the total number of moles of AO added (n1 + n2) is preferably 2 or larger, more preferably 3 or larger, still more preferably 4 or lager, but is preferably 40 or smaller, more preferably 32 or smaller, still more preferably 20 or smaller, particularly preferably 10 or smaller, most preferably 6 or smaller. When the total number is within the range indicated above, the advantageous effect tends to be more suitably achieved.

Specific examples of the compound of formula (I) include LIPONOL series (compounds of formula (I) where R² is -(CH₂CH₂)ₓ-H and R³ is - (CH₂CH₂)_{y}-H) available from LION SPECIALTY CHEMICALS CO., LTD. These may be used alone or in combinations of two or more.

Specific examples of the compound of formula (I-1) include POE(2) octylamine, POE(4) decylamine, POE(2) dodecylamine, POE(5) dodecylamine, POE(15) dodecylamine, POE(2) tetradecylamine, POE(2) hexadecylamine, POE(2) octadecylamine, POE(20) octadecylamine, and POE(2) octadecenylamine. Here, the expression "POE(m)" means that the number of moles added of the polyoxyethylene is m on average. Examples of such commercial products include AMIET 102 (POE (2) dodecylamine), AMIET 105 (POE(5) dodecylamine), AMIET 302 (POE(2) octadecylamine), and AMIET 320 (POE(20) octadecylamine) all available from Kao Corporation.

The compound of formula (I) used may be, for example, any of these commercial products. Alternatively, the compound may be produced separately from the commercial products. A non-limiting exemplary production method includes reacting an alkylene oxide with a polyamine compound in the presence or absence of a catalyst.

The amount of the compound of formula (I) (the total amount of two or more compounds, if used in combination) per 100 parts by mass of the rubber component content is preferably 0.1 parts by mass or more, more preferably 0.5 parts by mass or more, still more preferably 1.0 parts by mass or more, particularly preferably 2.0 parts by mass or more. The amount per 100 parts by mass of the rubber component content is also preferably 10.0 parts by mass or less, more preferably 8.0 parts by mass or less, still more preferably 6.0 parts by mass or less. When the amount of the compound of formula (I) is within the range indicated above, the advantageous effect can be more suitably achieved.

The rubber composition desirably contains a silane coupling agent to better achieve the advantageous effect.

Non-limiting examples of silane coupling agents include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl-tetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane and 2-mercaptoethyltriethoxysilane; vinyl silane coupling agents such as vinyltriethoxysilane and vinyl trimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from, for example, Degussa, Momentive, Shin-Etsu Silicone, Tokyo Chemical Industry Co., Ltd., AZmax. Co., Dow Corning Toray Co., Ltd., etc. These may be used alone or in combinations of two or more. Among these, mercapto or amino silane coupling agents are preferred to obtain good handling stability and good fuel economy.

The amount of silane coupling agents per 100 parts by mass of the silica content is preferably 3 parts by mass or more, more preferably 6 parts by mass or more, still more preferably 10 parts by mass or more, but is preferably 16 parts by mass or less, more preferably 14 parts by mass or less, still more preferably 12 parts by mass or less. When the amount is within the range indicated above, the advantageous effect tends to be better achieved.

The rubber composition desirably contains one or more resins as plasticizers to better achieve the advantageous effect.

The resins are desirably at least one resin selected from the group consisting of C5 resins, C5/C9 resins, C9 resins, coumarone-indene resins, styrene resins, terpene resins, cyclopentadiene resins, and hydrogenated products of these resins.

The term "C5 resins" refers to polymers containing a C₅ fraction as a structural monomer. Examples include polymers obtained by polymerizing a C₅ fraction, which is produced by thermal cracking of naphtha in the petrochemical industry, in the presence of a Friedel-Crafts catalyst such as AlCl₃ or BF₃. A C₅ fraction usually contains olefinic hydrocarbons such as 1-pentene, 2-pentene, 2-methyl-1-butene, 2-methyl-2-butene, and 3-methyl-1-butene; diolefinic hydrocarbons such as 2-methyl-1,3-butadiene, 1,2-pentadiene, 1,3-pentadiene, and 3-methyl-1,2-butadiene; and other components.

The term "C5/C9 resins" refers to polymers containing a C₅ fraction and a C₉ fraction as structural monomers. Examples include polymers obtained by polymerizing C₅ and C₉ fractions derived from petroleum in the presence of a Friedel-Crafts catalyst such as AlCl₃ or BF₃. Specific examples include copolymers mainly containing styrene, vinyltoluene, α-methylstyrene, indene, etc.

Herein, C5/C9 resins are regarded as resins different from styrene resins, C5 resins, and C9 resins.

The term "C9 resins" refers to polymers containing a C₉ fraction as a structural monomer. Examples include polymers obtained by polymerizing a C₉ fraction, which is produced as a byproduct together with petrochemical basic raw materials such as ethylene and propylene by thermal cracking of naphtha in the petrochemical industry, in the presence of a Friedel-Crafts catalyst such as AlCl₃ or BF₃. Specific examples of the C₉ fraction include vinyltoluene, α-methylstyrene, β-methylstyrene, γ-methylstyrene, o-methylstyrene, p-methylstyrene, and indene. The C9 resins may be obtained by using a C₉ fraction with other raw materials, including a C₈ fraction such as styrene, a C₁₀ fraction such as methylindene or 1,3-dimethylstyrene, and naphthalene, vinylnaphthalene, vinylanthracene, or p-tert-butylstyrene, and directly copolymerizing such a mixture of raw materials including C₈ to C₁₀ fractions, e.g., using a Friedel-Crafts catalyst.

Herein, C9 resins are regarded as resins different from styrene resins.

The term "coumarone-indene resins" refers to polymers containing coumarone and indene as structural monomers. Examples include copolymers of coumarone and indene and copolymers of coumarone, indene, and other monomers copolymerizable therewith.

The term "styrene resins" refers to polymers containing a styrenic monomer as a structural monomer. Examples include homopolymers polymerized from single styrenic monomers alone, copolymers copolymerized from two or more styrenic monomers, and copolymers of styrenic monomers and other monomers copolymerizable therewith.

Examples of styrenic monomers include styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, and p-chlorostyrene. Each of these styrenic monomers may be used alone, or two or more of these may be used in combination. Styrene or α-methylstyrene is preferred among these.

To better achieve the advantageous effect, α-methylstyrene resins (e.g., α-methylstyrene homopolymers, copolymers of styrene and α-methylstyrene) are preferred among the styrene resins, with styrene/α-methylstyrene resins (copolymers of styrene and α-methylstyrene) being more preferred.

The term "terpene resins" refers to polymers containing a terpene compound (terpene monomer) as a structural monomer. Examples include homopolymers polymerized from single terpene compounds alone, copolymers copolymerized from two or more terpene compounds, and copolymers of terpene compounds and other monomers copolymerizable therewith.

The term "terpene compounds" refers to hydrocarbons having a composition represented by (C₅H₈)ₙ or oxygen-containing derivatives thereof, which have a terpene backbone and are classified into monoterpenes (C₁₀H₁₆), sesquiterpenes (C₁₅H₂₄), diterpenes (C₂₀H₃₂), etc. Examples of the terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Each of these terpene compounds may be used alone, or two or more of these may be used in combination.

To better achieve the advantageous effect, homopolymers of terpene compounds (polyterpene resins) or copolymers of terpene compounds and styrenic monomers are preferred among the terpene resins, with copolymers of terpene compounds and styrenic monomers being more preferred. Moreover, the copolymers of terpene compounds and styrenic monomers are preferably copolymers of terpene compounds and styrene (terpene-styrene resins).

Herein, polymers containing a terpene compound and a styrenic monomer as structural monomers, such as terpene-styrene resins, are regarded as terpene resins rather than styrene resins.

The term "cyclopentadiene resins" refers to polymers containing a cyclopentadiene monomer as a structural monomer. Examples include homopolymers polymerized from single cyclopentadiene monomers alone, copolymers copolymerized from two or more cyclopentadiene monomers, and copolymers of cyclopentadiene monomers and other monomers copolymerizable therewith.

Examples of cyclopentadiene monomers include cyclopentadiene, dicyclopentadiene, and tricyclopentadiene. Each of these cyclopentadiene monomers may be used alone, or two or more of these may be used in combination. Dicyclopentadiene is preferred among these. In other words, the cyclopentadiene resins are preferably polymers containing dicyclopentadiene (DCPD) as a structural monomer (DCPD resins), more preferably hydrogenated DCPD resins.

In view of handling stability and fuel economy, the resins preferably include a styrene resin and/or a terpene resin.

The reason for this advantageous effect is believed to be as follows.

The use of a resin, in particular, a styrene resin and/or a terpene resin raises the Tg of the rubber compound so that the tan δ (energy loss) in a low temperature range increases. Moreover, as the amount of plasticizer components (AE) is increased, higher mobility at low temperatures is obtained. Accordingly, it is believed that wet grip performance at low temperatures is improved.

The amount (total amount) of resins per 100 parts by mass of the rubber component content is preferably 5 parts by mass or more, more preferably 8 parts by mass or more, still more preferably 10 parts by mass or more, particularly preferably 15 parts by mass or more, but is preferably 30 parts by mass or less, more preferably 25 parts by mass or less, still more preferably 20 parts by mass or less. When the amount is within the range indicated above, the advantageous effect tends to be better achieved.

The amount of styrene resins per 100 parts by mass of the rubber component content is preferably 5 parts by mass or more, more preferably 8 parts by mass or more, still more preferably 10 parts by mass or more, particularly preferably 15 parts by mass or more, but is preferably 30 parts by mass or less, more preferably 25 parts by mass or less, still more preferably 20 parts by mass or less. When the amount is within the range indicated above, the advantageous effect tends to be better achieved.

The amount of terpene resins per 100 parts by mass of the rubber component content is preferably 5 parts by mass or more, more preferably 8 parts by mass or more, still more preferably 10 parts by mass or more, particularly preferably 15 parts by mass or more, but is preferably 30 parts by mass or less, more preferably 25 parts by mass or less, still more preferably 20 parts by mass or less. When the amount is within the range indicated above, the advantageous effect tends to be better achieved.

The resins may be solid resins which are solid at room temperature (25°C) or liquid resins which are liquid at room temperature (25°C). To better achieve the advantageous effect, the resins preferably include at least a solid resin.

The softening point of the resins is preferably 50°C or higher, more preferably 80°C or higher, but is preferably 180°C or lower, more preferably 130°C or lower.

Herein, the softening point of the resins is determined as set forth in JIS K 6220-1:2001 using a ring and ball softening point measuring apparatus and defined as the temperature at which the ball drops down.

The amount of solid resins per 100 parts by mass of the rubber component content is preferably 5 parts by mass or more, more preferably 8 parts by mass or more, still more preferably 10 parts by mass or more, particularly preferably 15 parts by mass or more, but is preferably 30 parts by mass or less, more preferably 25 parts by mass or less, still more preferably 20 parts by mass or less. When the amount is within the range indicated above, the advantageous effect tends to be better achieved.

The amount of liquid resins per 100 parts by mass of the rubber component content is preferably 10 parts by mass or less, more preferably 5 parts by mass or less, still more preferably 1 part by mass or less, and may be 0 parts by mass. When the amount is within the range indicated above, the advantageous effect tends to be better achieved.

Usable commercial products of the resins are available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

Examples of plasticizers other than resins include liquid polymers and oils (including the oils contained in oil extended rubbers). Each of these plasticizers may be used alone, or two or more of these may be used in combination. Oils are preferred among these.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. In addition to these oils, oils after being used as lubricating oils in mixers for mixing rubber, engines, or other applications, or oils obtained by purifying waste cooking oils used in cooking establishments may also be appropriately used from the standpoint of life cycle assessment. Usable commercial products are available from Idemitsu Kosan Co., Ltd. , Sankyo Yuka Kogyo K.K., ENEOS Corporation, Olisoy, H&R, Hokoku Corporation, Showa Shell Sekiyu K.K., Fuji Kosan Co., Ltd., etc. Each of these oils may be used alone, or two or more of these may be used in combination.

The amount of oils per 100 parts by mass of the rubber component content is preferably 10 parts by mass or more, more preferably 15 parts by mass or more, still more preferably 20 parts by mass or more, particularly preferably 25 parts by mass or more. The upper limit is preferably 50 parts by mass or less, more preferably 40 parts by mass or less, still more preferably 35 parts by mass or less. When the amount is within the range indicated above, the advantageous effect tends to be better achieved.

The amount of plasticizers (the combined amount of resins, oils, and other plasticizers) per 100 parts by mass of the rubber component content is preferably 20 parts by mass or more, more preferably 25 parts by mass or more, still more preferably 30 parts by mass or more, particularly preferably 35 parts by mass or more, but is preferably 60 parts by mass or less, more preferably 50 parts by mass or less, still more preferably 45 parts by mass or less, particularly preferably 40 parts by mass or less. When the amount is within the range indicated above, the advantageous effect tends to be better achieved.

The rubber composition may contain an antioxidant.

Examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)-propionate]methane. Usable commercial products are available from Seiko Chemical Co., Ltd., Sumitomo Chemical Co., Ltd., Ouchi Shinko Chemical Industrial Co., Ltd., Flexsys, etc. Each of these antioxidants may be used alone, or two or more of these may be used in combination.

In the rubber composition, the amount of antioxidants per 100 parts by mass of the rubber component content is preferably 0.5 parts by mass or more, more preferably 0.8 parts by mass or more, still more preferably 1.0 parts by mass or more, but is preferably 10.0 parts by mass or less, more preferably 6.0 parts by mass or less, still more preferably 4.0 parts by mass or less. When the amount is within the range indicated above, the advantageous effect tends to be better achieved.

The rubber composition may contain a wax.

Non-limiting examples of waxes include petroleum waxes such as paraffin waxes and microcrystalline waxes; naturally-occurring waxes such as plant waxes and animal waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these waxes may be used alone, or two or more of these may be used in combination.

In the rubber composition, the amount of waxes per 100 parts by mass of the rubber component content is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain stearic acid.

The stearic acid used may be a conventional one. Usable commercial products are available from NOF Corporation, Kao Corporation, FUJIFILM Wako Pure Chemical Corporation, Chiba Fatty Acid Co., Ltd., etc. Each of these types of stearic acid may be used alone, or two or more of these may be used in combination.

In the rubber composition, the amount of stearic acid per 100 parts by mass of the rubber component content is preferably 1.0 parts by mass or more, more preferably 2.0 parts by mass or more, still more preferably 3.0 parts by mass or more, but is preferably 10.0 parts by mass or less, more preferably 6.0 parts by mass or less. When the amount is within the range indicated above, the advantageous effect tends to be better achieved.

The rubber composition may contain zinc oxide.

The zinc oxide used may be a conventional one. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these types of zinc oxide may be used alone, or two or more of these may be used in combination.

In the rubber composition, the amount of zinc oxide per 100 parts by mass of the rubber component content is preferably 1.0 parts by mass or more, more preferably 2.5 parts by mass or more, still more preferably 3.0 parts by mass or more, but is preferably 10.0 parts by mass or less, more preferably 6.0 parts by mass or less. When the amount is within the range indicated above, the advantageous effect tends to be better achieved.

The rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

In the rubber composition, the amount of sulfur per 100 parts by mass of the rubber component content is preferably 0.5 parts by mass or more, more preferably 0.8 parts by mass or more, still more preferably 1.0 parts by mass or more, but is preferably 3.5 parts by mass or less, more preferably 2.8 parts by mass or less, still more preferably 2.5 parts by mass or less. When the amount is within the range indicated above, the advantageous effect tends to be better achieved.

The rubber composition may contain a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

In the rubber composition, the amount of vulcanization accelerators per 100 parts by mass of the rubber component content is preferably 0.5 parts by mass or more, more preferably 0.8 parts by mass or more, still more preferably 1.0 parts by mass or more, but is preferably 10.0 parts by mass or less, more preferably 8.0 parts by mass or less, still more preferably 7.0 parts by mass or less. When the amount is within the range indicated above, the advantageous effect tends to be better achieved.

In addition to the above-mentioned components, the rubber composition may contain additives commonly used in the tire industry, such as organic peroxides. The amounts of such additives are each preferably 0.1 to 200 parts by mass per 100 parts by mass of the rubber component content.

The rubber composition may be prepared, for example, by kneading the components using a rubber kneading machine such as an open roll mill or a Banbury mixer, and then vulcanizing the kneaded mixture.

The kneading conditions are as follows. In a base kneading step of kneading additives other than vulcanization agents and vulcanization accelerators, the kneading temperature is usually 100 to 180°C, preferably 120 to 170°C. In a final kneading step of kneading vulcanization agents and vulcanization accelerators, the kneading temperature is usually 120°C or lower, preferably 85 to 110°C. Then, the composition obtained after kneading vulcanization agents and vulcanization accelerators is usually vulcanized by press vulcanization, for example. The vulcanization temperature is usually 140 to 190°C, preferably 150 to 185°C. The vulcanization time is usually 5 to 15 minutes.

To better achieve the advantageous effect, the ratio of the acetone extractable content (AE) to the amount (parts by mass) of silica per 100 parts by mass of the rubber component content (AE/Silica content) in the rubber composition is desirably 0.20 or more.

The lower limit of the value of "AE/Silica content" is preferably 0.25 or more, more preferably 0.30 or more, still more preferably 0.33 or more, particularly preferably 0.35 or more. The upper limit is preferably 0.50 or less, more preferably 0.45 or less, still more preferably 0.43 or less, particularly preferably 0.42 or less. When the value is within the range indicated above, the advantageous effect tends to be better achieved.

The reason for this advantageous effect is believed to be as follows.

When the value of "AE/Silica content" is adjusted to a predetermined value or more, the amount of plasticizer components (AE) entering the fine silica-polymer network is increased, and the fine mobility of the polymer is improved so that it has higher mobility even at low temperatures. Thus, conformity at low temperatures is further improved, and energy loss due to the friction between the silica and polymer is more likely to occur. Accordingly, it is believed that wet grip performance at low temperatures is improved.

To better achieve the advantageous effect, the ratio of the acetone extractable content (AE) to the amount (parts by mass) of compounds of formula (I) per 100 parts by mass of the rubber component content (AE/Compound (I) content) in the rubber composition is desirably 8.0 or more.

The lower limit of the value of "AE/Compound (I) content" is preferably 9.0 or more, more preferably 10.0 or more, still more preferably 10.5 or more, particularly preferably 11.0 or more. The upper limit is preferably 15.0 or less, more preferably 14.0 or less, still more preferably 13.5 or less, particularly preferably 13.0 or less. When the value is within the range indicated above, the advantageous effect tends to be better achieved.

The reason for this advantageous effect is believed to be as follows.

When the value of "AE/Compound (I) content" is adjusted to a predetermined value or more, the amount of plasticizer components (AE) entering the fine silica-polymer network is increased, and the fine mobility of the polymer is improved so that it has higher mobility even at low temperatures. Thus, conformity at low temperatures is further improved, and energy loss due to the friction between the silica and polymer is more likely to occur. Accordingly, it is believed that wet grip performance at low temperatures is improved.

To better achieve the advantageous effect, desirably, the rubber composition contains one or more resins and the ratio of the amount (parts by mass) of resins to the amount (parts by mass) of silica, each per 100 parts by mass of the rubber component content (Resin content/Silica content) in the rubber composition is 0.10 or more.

The lower limit of the value of "Resin content/Silica content" is preferably 0.15 or more, more preferably 0.17 or more, still more preferably 0.20 or more, particularly preferably 0.22 or more. The upper limit is preferably 0.50 or less, more preferably 0.40 or less, still more preferably 0.30 or less, particularly preferably 0.27 or less. When the value is within the range indicated above, the advantageous effect tends to be better achieved.

The reason for this advantageous effect is believed to be as follows.

When the value of "Resin content/Silica content" is adjusted to a predetermined value or more, it is considered that the silica hydrophobized by the compound of formula (I) is coated with the resin component and becomes more likely to disperse in the rubber. Thus, conformity at low temperatures is further improved, and energy loss due to the friction between the silica and polymer is more likely to occur. Accordingly, it is believed that wet grip performance at low temperatures is improved.

To better achieve the advantageous effect, desirably, the rubber composition contains one or more resins and the ratio of the amount (parts by mass) of resins to the amount (parts by mass) of compounds of formula (I), each per 100 parts by mass of the rubber component content (Resin content/Compound (I) content) in the rubber composition is 3.0 or more.

The lower limit of the value of "Resin content/Compound (I) content" is preferably 4.0 or more, more preferably 5.0 or more, still more preferably 5.5 or more, particularly preferably 6.0 or more. The upper limit is preferably 15.0 or less, more preferably 12.5 or less, still more preferably 10.0 or less, particularly preferably 8.0 or less. When the value is within the range indicated above, the advantageous effect tends to be better achieved.

The reason for this advantageous effect is believed to be as follows.

When the value of "Resin content/Compound (I) content" is adjusted to a predetermined value or more, it is considered that the silica which has reacted with the compound of formula (I) is coated with the resin and becomes more likely to disperse. Thus, conformity at low temperatures is further improved, and energy loss due to the friction between the silica and polymer is more likely to occur. Accordingly, it is believed that wet grip performance at low temperatures is improved.

The glass transition temperature (Tg) of the rubber composition is preferably lower than 0°C, more preferably lower than -5°C, still more preferably lower than -10°C. The lower limit of the glass transition temperature is preferably not lower than -50°C, more preferably not lower than -45°C, still more preferably not lower than -40°C.

Herein, the Tg of the rubber composition refers to the tan δ peak temperature corresponding to the maximum tan δ in the tan δ versus temperature curve determined by a viscoelastic test. Specifically, the Tg, i.e., tan δ peak temperature, can be measured as described later in EXAMPLES.

The rubber composition may be used in tire components (i.e., as a tire rubber composition), including for example treads, sidewalls, base treads, undertreads, shoulders, clinches, bead apexes, breaker cushion rubbers, rubbers for carcass cord topping, insulations, chafers, and innerliners, and side reinforcement layers of run-flat tires. The rubber composition is especially suitable for use in treads, in particular the portions (cap treads) which contact the road during running. Here, when the rubber composition is used in a tread (cap tread), a rubber layer (e.g., a base tread) disposed inwardly with respect to the tire radial direction thereof may contain the compound of formula (I). Moreover, the following relationship is preferably satisfied: [the amount of compounds of formula (I) in the tread (cap tread)] > [the amount of compounds of formula (I) in the rubber layer disposed inwardly with respect to the tire radial direction of the tread (cap tread)].

The tire of the present invention can be produced from the rubber composition by usual methods.

Specifically, the rubber composition in an unvulcanized state may be extruded into the shape of a tread or other tire component and then formed together with other tire components on a tire building machine in a usual manner to build an unvulcanized tire. The unvulcanized tire may be heated and pressurized in a vulcanizer to produce a tire.

The tire (e.g., pneumatic tire) may be used as tires for passenger cars; tires for trucks and buses; tires for two-wheeled vehicles; high performance tires; winter tires such as studless winter tires and cold weather tires; run-flat tires provided with side reinforcing layers; noise absorber-equipped tires which include a noise absorber such as sponge on the tire inner cavity; sealant-attached tires which include a sealant capable of sealing punctures either inside the tire or on the tire inner cavity; electronic component-equipped tires which include an electronic component such as a sensor or a radio tag either inside the tire or on the tire inner cavity, etc. The tire is suitable for passenger cars.

### EXAMPLES

The present invention will be specifically described with reference to, but not limited to, examples.

The following describes the chemicals used in the examples and comparative examples.
NR: TSR20
SBR 1: modified SBR (S-SBR having an end modified with 3-diethylaminopropyltrimethoxysilane, styrene content: 25% by mass, vinyl content: 57% by mass, Tg: -25°C) available from Sumitomo Chemical Co., Ltd.
SBR 2: NS612 (S-SBR, non-oil extended, styrene content: 15% by mass, vinyl content: 30% by mass, Tg: -65°C, Mw: 780, 000) available from Zeon Corporation
BR: BR150B (vinyl content: 1% by mass, cis content: 97% by mass) available from Ube Industries, Ltd.
Carbon black N220: SHOBLACK N220 (N₂SA: 114 m²/g) available from Cabot Japan K.K.
Silica 1: Ultrasil VN3 (N₂SA: 175 m²/g) available from Evonik Degussa
Silica 2: 9000GR (N₂SA: 235 m²/g) available from Evonik Degussa
Silane coupling agent: Si266 (bis(3-triethoxysilylpropyl) disulfide) available from Evonik Degussa
Compound 1: LIPONOL HT/14 (a compound of formula (I-1)) available from LION SPECIALTY CHEMICALS CO., LTD.
Compound 2: LIPONOL T/15 (a compound of formula (I-1)) available from LION SPECIALTY CHEMICALS CO., LTD.
Compound 3: LIPONOL C/15 (a compound of formula (I) (formula (I-1))) available from LION SPECIALTY CHEMICALS CO., LTD.
Compound 4: AMIET 102 (POE (2) dodecylamine, a compound of formula (I-1)) available from Kao Corporation
Resin 1: Sylvares SA85 (a-methylstyrene resin (copolymer of α-methylstyrene and styrene), softening point: 85°C) available from Arizona Chemical
Resin 2: Sylvatraxx 4150 (β-pinene resin, β-pinene content: 98% by mass or more, Mw: 2350, Mn: 830) available from Arizona Chemical
Resin 3: YS Resin TO125 (aromatic modified terpene resin, softening point: 125°C) available from Yasuhara Chemical Co., Ltd.
Oil: Diana Process AH-24 (aromatic process oil) available from Idemitsu Kosan Co., Ltd.
Zinc oxide: zinc oxide #2 available from Mitsui Mining & Smelting Co., Ltd.
Antioxidant: Vulkanox 4020 (N-phenyl-N'-(1,3-dimethylbutyl)-p-phenylenediamine) available from Lanxess
Stearic acid: stearic acid "TSUBAKI" available from NOF Corporation
Wax: Ozoace 0355 available from Nippon Seiro Co., Ltd.
Sulfur: powdered sulfur available from Tsurumi Chemical Industry Co., Ltd.
Vulcanization accelerator: Nocceler CZ (N-cyclohexyl-2-benzothiazolylsulfenamide) available from Ouchi Shinko Chemical Industrial Co., Ltd.

### (Examples and Comparative Examples)

According to the formulation recipe shown in Table 1 to 6, the chemicals other than the sulfur and vulcanization accelerator were kneaded at 150°C for five minutes using a 1.7 L Banbury mixer (Kobe Steel, Ltd.) to give a kneaded mixture. Then, the sulfur and vulcanization accelerator were added to the kneaded mixture, and they were kneaded at 80°C for five minutes using an open roll mill to give an unvulcanized rubber composition.

The unvulcanized rubber composition was formed into the shape of a cap tread and assembled with other tire components to build an unvulcanized tire. The unvulcanized tire was press-vulcanized at 170°C for 10 minutes to prepare a test tire (studless winter tire for passenger cars, size: 205/70R15).

The test tires prepared as above were subjected to the evaluations below. Tables 1 to 6 show the results.

Moreover, the following evaluation standards were used to calculate indices in the evaluations.
Tables 1 and 2: Comparative Example 1-6
Tables 3 and 4: Comparative Example 2-7
Tables 5 and 6: Comparative Example 3-6

### (Acetone extractable content (AE))

The amount of substances extracted with acetone from a rubber specimen (sample) cut out of the tread of each test tire was measured by a method of measuring the acetone extractable content in accordance with JIS K 6229. Acetone extractable content (% by mass) = [(Mass of sample before extraction) - (Mass of sample after extraction)]/(Mass of sample before extraction) × 100

### (Grass transition temperature (Tg))

A viscoelastic measurement sample with a size of 20 mm in length × 4 mm in width × 1 mm in thickness was collected from the tread portion of each test tire such that the longer side of the sample was in the tire circumferential direction. The sample was measured using a GABO Eplexor over a temperature range of -70 to 70°C at a frequency of 10 Hz, an initial strain of 10%, an amplitude of ± 0.5%, and a rate of temperature increase of 2°C/min to establish a tan δ versus temperature curve. The temperature at which the tan δ reached the maximum was determined as the grass transition temperature (Tg).

### (Wet grip performance at low temperatures)

The test tires were mounted on a front-engine, front-wheel-drive car of 2000 cc displacement made in Japan. The car was driven on a wet road (wet road surface at 0 to 3°C without snow and ice). The stopping distance required for the car to stop after the brakes that lock up were applied at 80 km/h was measured. The stopping distances are expressed as an index using the equation below where the stopping distance of the standard comparative example is taken as 100. A higher index indicates better wet grip performance at low temperatures. (Index of wet grip performance at low temperatures) = (Stopping distance of standard comparative example) / (stopping distance of each formulation example) × 100

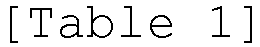

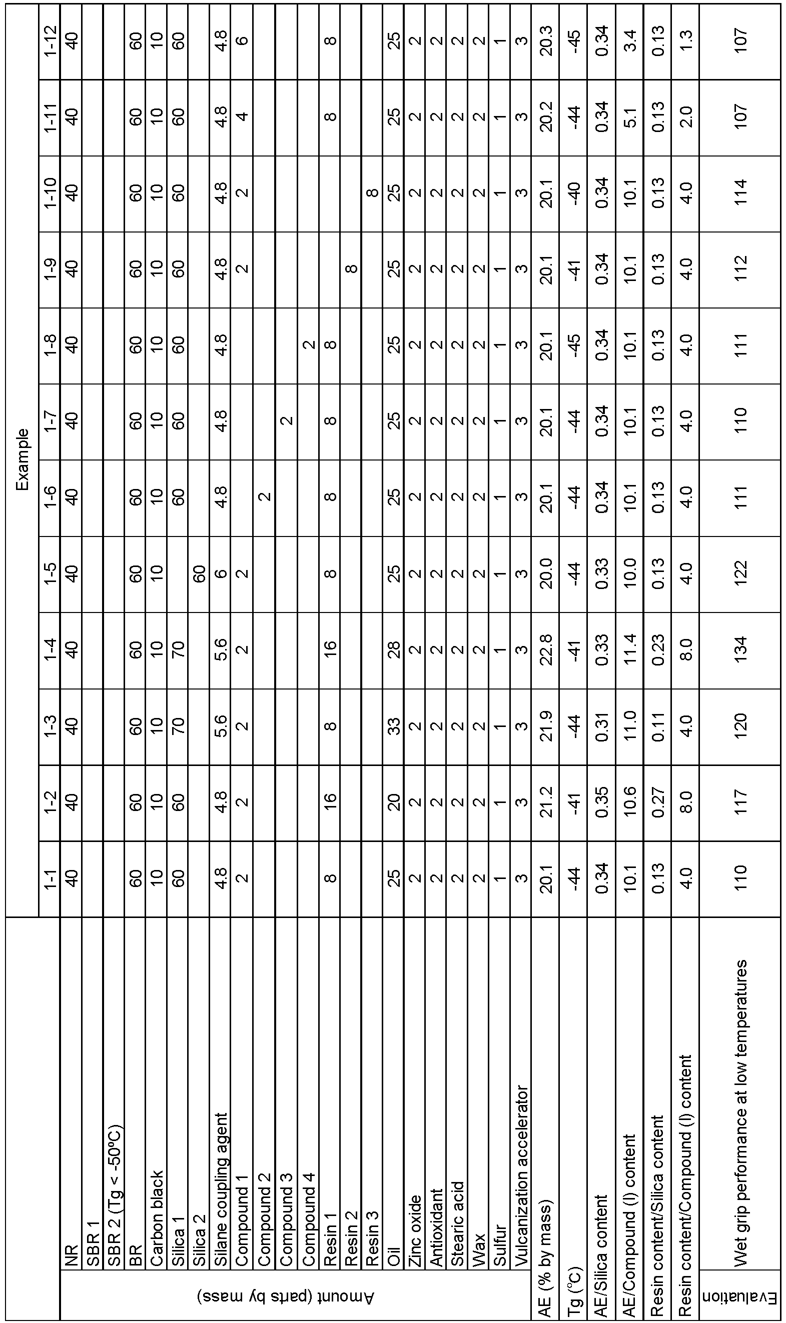

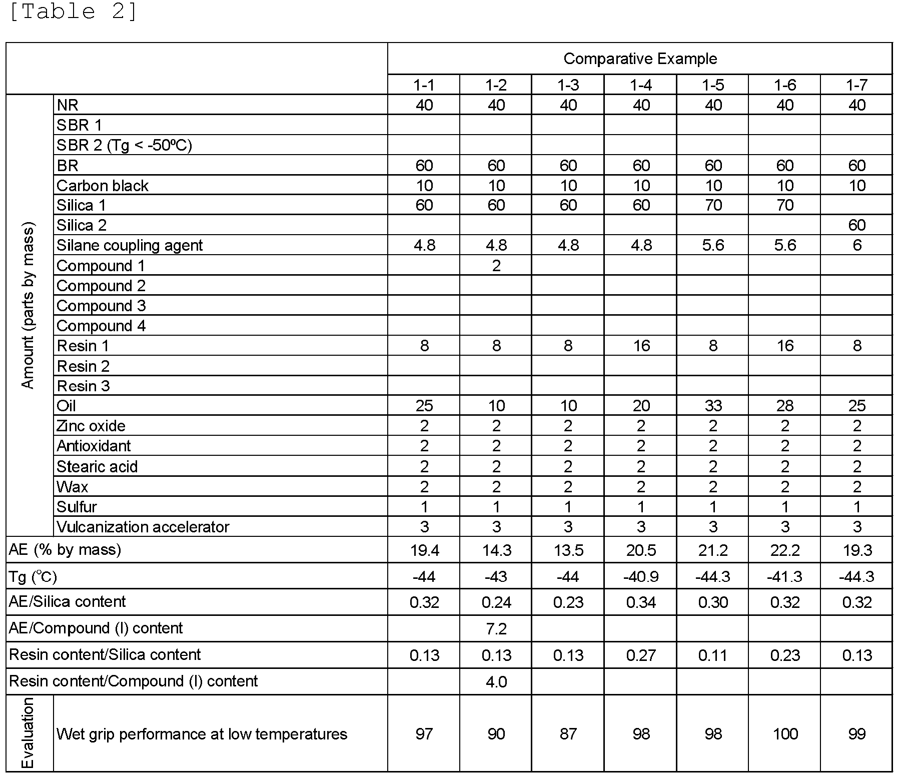

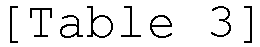

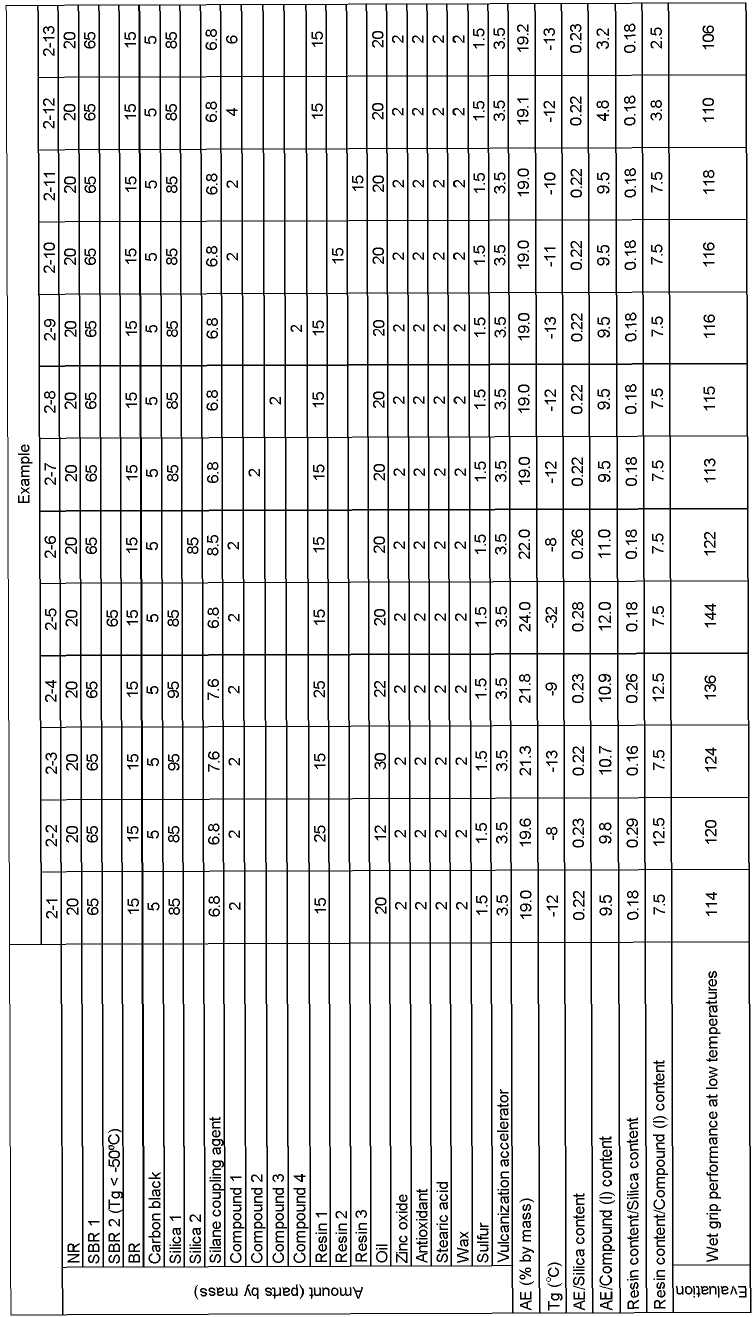

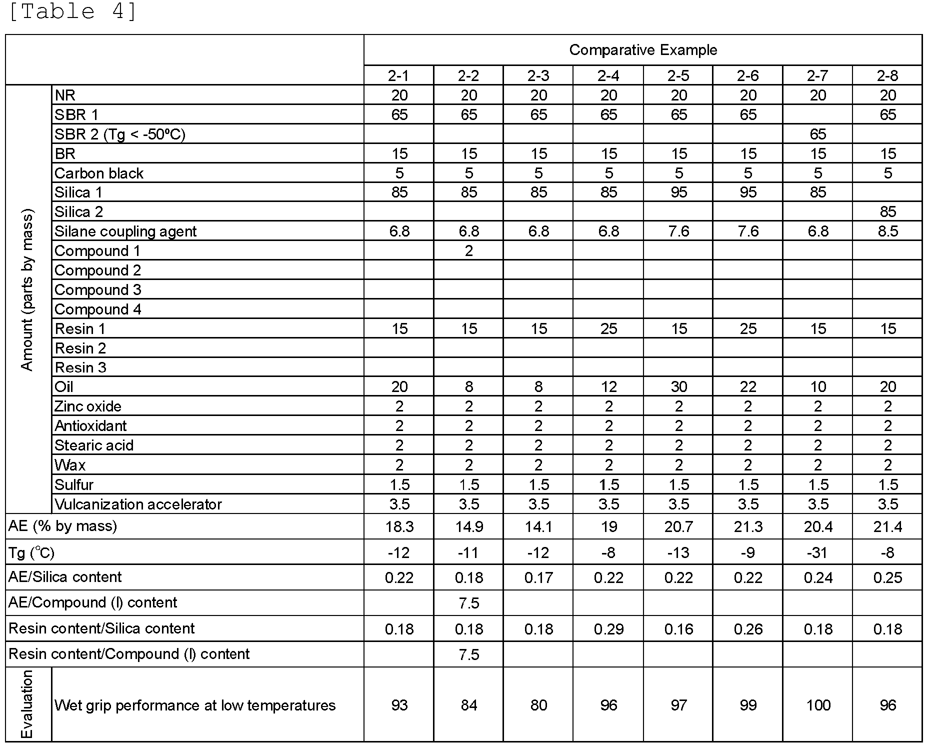

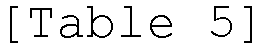

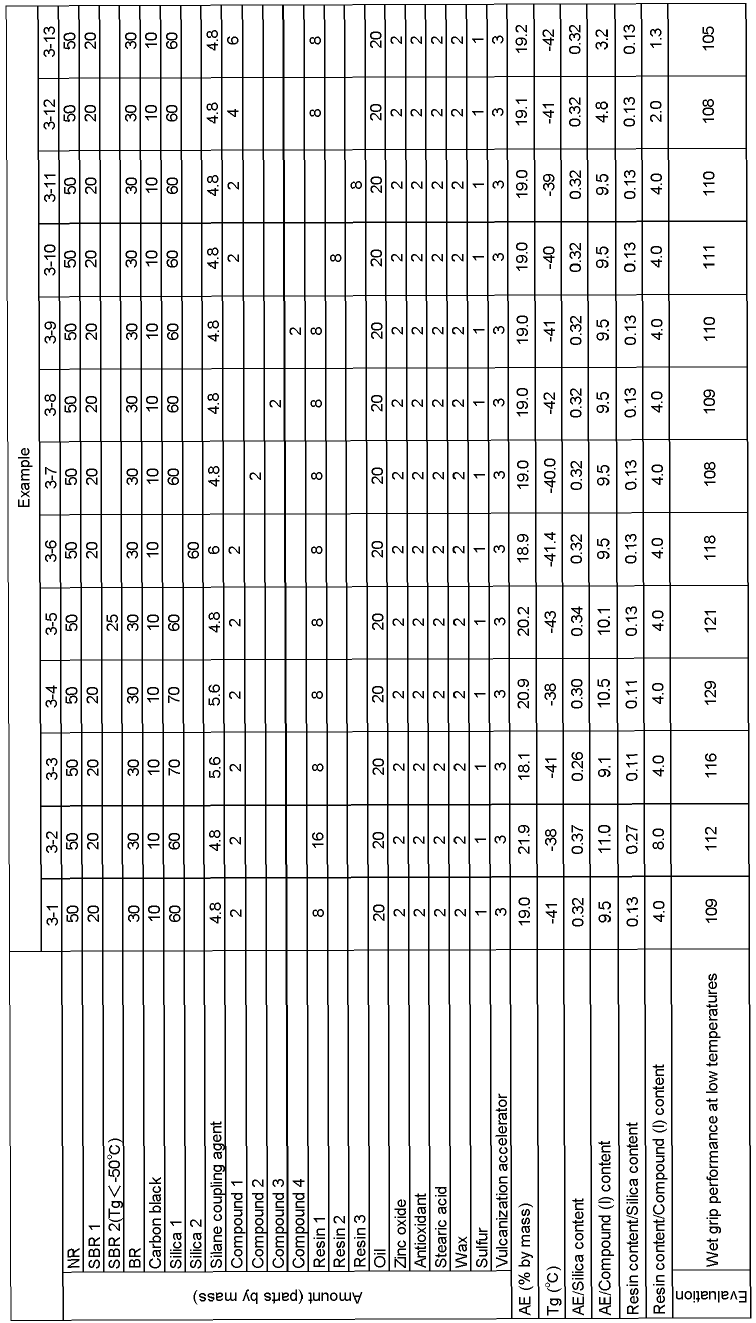

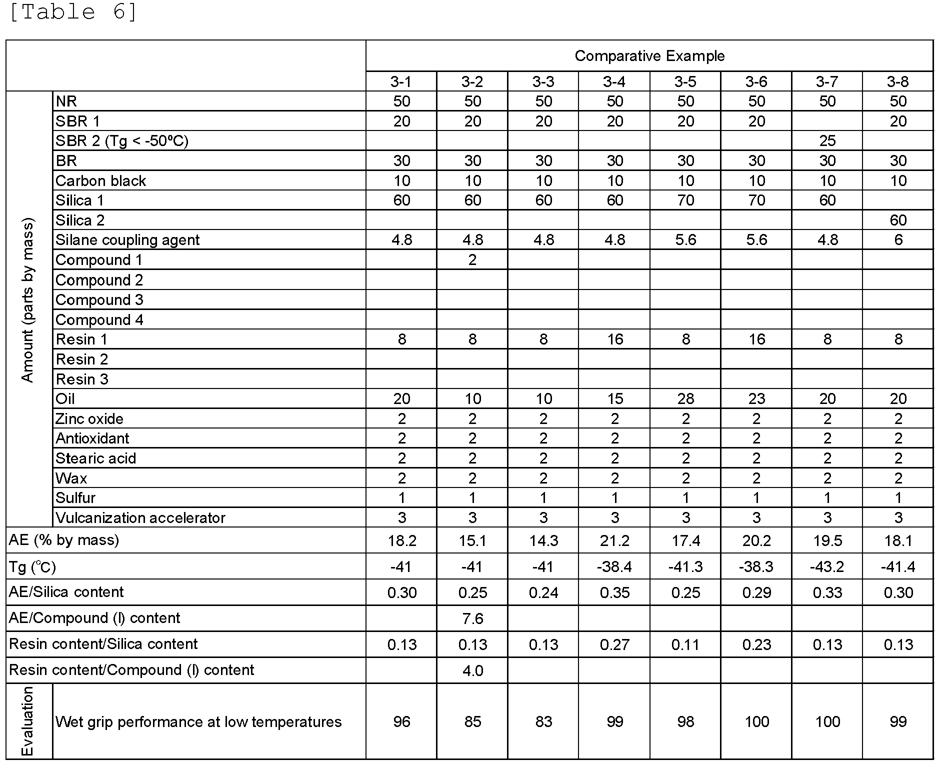

As shown in the tables, the examples had excellent wet grip performance at low temperatures as compared to the comparative examples.

## Claims

1. A pneumatic tire, comprising a tire component formed from a tire rubber composition,
the tire rubber composition comprising:
at least one rubber component;
at least one silica; and
at least one compound represented by the following formula (I): 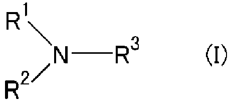 wherein R¹ represents a hydrocarbon group; and R² and R³ are the same or different and each represent a hydrogen atom, a hydrocarbon group, or a -(AO)ₙ-H group where n represents an integer of 1 or larger, n for R² and n for R³ may be the same as or different from each other, and each AO is the same or different and represents an oxyalkylene group having 2 or more carbon atoms, and at least one of R² or R³ is a -(AO)ₙ-H group,
the tire rubber composition having an acetone extractable content of not lower than 16.0% by mass, when measured from a vulcanized rubber composition in accordance with JIS K 6229:2015.

2. The pneumatic tire according to claim 1,
wherein the tire rubber composition has a silica content of 50 parts by mass or more per 100 parts by mass of a rubber component content in the tire rubber composition.

3. The pneumatic tire according to claim 1 or 2,
wherein the rubber component includes a styrene-butadiene rubber having a glass transition temperature of lower than -50°C when measured by differential scanning calorimetry (DSC) at a rate of temperature increase of 10°C/min in accordance with JIS K7121.

4. The pneumatic tire according to any one of claims 1 to 3,
wherein the tire rubber composition comprises at least one selected from the group consisting of styrene resins and terpene resins.

5. The pneumatic tire according to any one of claims 1 to 4,
wherein the silica has an average primary particle size of 16 nm or less.

6. The pneumatic tire according to any one of claims 1 to 5,
wherein the rubber component includes an isoprene-based rubber.

7. The pneumatic tire according to any one of claims 1 to 6,
wherein a ratio of the acetone extractable content (AE) to an amount (parts by mass) of the silica per 100 parts by mass of a rubber component content (AE/Silica content) in the tire rubber composition is 0.25 or more.

8. The pneumatic tire according to any one of claims 1 to 7,
wherein a ratio of the acetone extractable content (AE) to an amount (parts by mass) of the compound of formula (I) per 100 parts by mass of a rubber component content (AE/Compound (I) content) in the tire rubber composition is 10.0 or more.

9. The pneumatic tire according to any one of claims 1 to 8,
wherein the tire rubber composition comprises at least one resin, and a ratio of an amount (parts by mass) of the resin to an amount (parts by mass) of the silica, each per 100 parts by mass of a rubber component content (Resin content/Silica content) in the tire rubber composition is 0.20 or more.

10. The pneumatic tire according to any one of claims 1 to 9,
wherein the tire rubber composition comprises at least one resin, and a ratio of an amount (parts by mass) of the resin to an amount (parts by mass) of the compound of formula (I), each per 100 parts by mass of a rubber component content (Resin content/Compound (I) content) in the tire rubber composition is 5.5 or more.

11. The pneumatic tire according to any one of claims 1 to 10,
wherein the tire component is a tread.

## Patentansprüche

1. Luftreifen, umfassend eine Reifenkomponente, welche aus einer Reifenkautschukzusammensetzung gebildet ist,
wobei die Reifenkautschukzusammensetzung umfasst:
mindestens eine Kautschukkomponente;
mindestens ein Siliciumdioxid; und
mindestens eine durch die folgende Formel (I) dargestellte Verbindung: 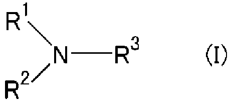 wobei R¹ eine Kohlenwasserstoffgruppe darstellt, und R² und R³ gleich oder verschieden sind und jeweils ein Wasserstoffatom, eine Kohlenwasserstoffgruppe oder eine -(AO)ₙ-H-Gruppe darstellen, worin n eine ganze Zahl von 1 oder größer darstellt, n für R² und n für R³ zueinander gleich oder voneinander verschieden sein können, und jedes AO gleich oder verschieden ist und eine Oxyalkylengruppe mit 2 oder mehr Kohlenstoffatomen darstellt, und mindestens eines von R² oder R³ eine -(AO)ₙ-H-Gruppe ist,
wobei die Reifenkautschukzusammensetzung einen Aceton-extrahierbaren Gehalt von nicht niedriger als 16,0 Massen-% aufweist, wenn gemäß JIS K 6229:2015 aus einer vulkanisierten Kautschukzusammensetzung gemessen.

2. Luftreifen nach Anspruch 1,
wobei die Reifenkautschukzusammensetzung einen Siliciumdioxidgehalt von 50 Massenteilen oder mehr pro 100 Massenteile eines Kautschukkomponentengehalts in der Reifenkautschukzusammensetzung aufweist.

3. Luftreifen nach Anspruch 1 oder 2,
wobei die Kautschukkomponente einen Styrol-Butadien-Kautschuk enthält, der eine Glasübergangstemperatur von niedriger als -50°C aufweist, wenn durch dynamische Differenzkalorimetrie (DSC) bei einer Temperaturanstiegsrate von 10°C/min gemäß JIS K7121 gemessen.

4. Luftreifen nach einem der Ansprüche 1 bis 3,
wobei die Reifenkautschukzusammensetzung mindestens eines enthält, welches ausgewählt ist aus der Gruppe bestehend aus Styrolharzen und Terpenharzen.

5. Luftreifen nach einem der Ansprüche 1 bis 4,
wobei das Siliciumdioxid eine mittlere Primärpartikelgröße von 16 nm oder weniger aufweist.

6. Luftreifen nach einem der Ansprüche 1 bis 5,
wobei die Kautschukkomponente einen Isopren-basierten Kautschuk enthält.

7. Luftreifen nach einem der Ansprüche 1 bis 6,
wobei ein Verhältnis des Aceton-extrahierbaren Gehalts (AE) zu einer Menge (Massenteile) des Siliciumdioxids pro 100 Massenteile eines Kautschukkomponentengehalts (AE/Siliciumdioxidgehalt) in der Reifenkautschukzusammensetzung 0,25 oder mehr beträgt.

8. Luftreifen nach einem der Ansprüche 1 bis 7,
wobei ein Verhältnis des Aceton-extrahierbaren Gehalts (AE) zu einer Menge (Massenteile) der Verbindung der Formel (I) pro 100 Massenteile eines Kautschukkomponentengehalts (AE/Verbindung-(I)-Gehalt) in der Reifenkautschukzusammensetzung 10,0 oder mehr beträgt.

9. Luftreifen nach einem der Ansprüche 1 bis 8,
wobei die Reifenkautschukzusammensetzung mindestens ein Harz umfasst, und ein Verhältnis einer Menge (Massenteile) des Harzes zu einer Menge (Massenteile) des Siliciumdioxids, jeweils pro 100 Massenteile eines Kautschukkomponentengehalts (Harzgehalt/Siliciumdioxidgehalt) in der Reifenkautschukzusammensetzung 0,20 oder mehr beträgt.

10. Luftreifen nach einem der Ansprüche 1 bis 9,
wobei die Reifenkautschukzusammensetzung mindestens ein Harz umfasst, und ein Verhältnis einer Menge (Massenteile) des Harzes zu einer Menge (Massenteile) der Verbindung der Formel (I), jeweils pro 100 Massenteile eines Kautschukkomponentengehalts (Harzgehalt/Verbindung-(I)-Gehalt) in der Reifenkautschukzusammensetzung 5,5 oder mehr beträgt.

11. Luftreifen nach einem der Ansprüche 1 bis 10,
wobei die Reifenkomponente ein Laufstreifen ist.

## Revendications

1. Pneumatique, comprenant un composant de pneumatique formé d'une composition de caoutchouc de pneumatique,
la composition de caoutchouc de pneumatique comprenant :
au moins un composant de caoutchouc ;
au moins une silice ; et
au moins un composé représenté par la formule (I) suivante : 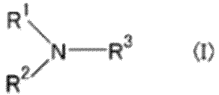
dans laquelle R¹ représente un groupe hydrocarbure ; et R² et R³ sont identiques ou différents et chacun représente un atome d'hydrogène, un groupe hydrocarbure ou un groupe -AO)ₙ-H où n représente un nombre entier de 1 ou plus, n pour R² et n pour R³ peuvent être identiques ou différents l'un de l'autre et chaque AO est identique ou différent et représente un groupe oxyalkylène ayant 2 ou plus de 2 atomes de carbone et au moins un de R² ou R³ est un groupe - (AO) -H,
la composition de caoutchouc de pneumatique ayant une teneur extractible en acétone de pas moins de 16,0 % en masse, lorsqu'elle est mesurée à partir d'une composition de caoutchouc vulcanisé selon la norme JIS K 6229:2015.

2. Pneumatique selon la revendication 1,
dans lequel la composition de caoutchouc de pneumatique a une teneur en silice de 50 parties en masse ou plus par 100 parties en masse d'une teneur de composant de caoutchouc dans la composition de caoutchouc de pneumatique.

3. Pneumatique selon la revendication 1 ou 2,
dans lequel le composant de caoutchouc comprend un caoutchouc de styrène-butadiène ayant une température de transition vitreuse de moins de -50 °C lorsqu'elle est mesurée par calorimétrie à balayage différentiel (DSC) à une vitesse d'augmentation de température de 10 °C/min selon la norme JIS K7121.

4. Pneumatique selon l'une quelconque des revendications 1 à 3,
dans lequel la composition de caoutchouc de pneumatique comprend au moins une choisie dans le groupe constitué par les résines de styrène et les résines de terpène.

5. Pneumatique selon l'une quelconque des revendications 1 à 4,
dans lequel la silice a une taille de particule primaire moyenne de 16 nm ou moins.

6. Pneumatique selon l'une quelconque des revendications 1 à 5,
dans lequel le composant de caoutchouc comprend un caoutchouc à base d'isoprène.

7. Pneumatique selon l'une quelconque des revendications 1 à 6,
dans lequel un rapport de la teneur extractible en acétone (AE) à une quantité (parties en masse) de la silice par 100 parties en masse d'une teneur de composant de caoutchouc (AE/teneur en silice) dans la composition de caoutchouc de pneumatique est de 0,25 ou plus.

8. Pneumatique selon l'une quelconque des revendications 1 à 7,
dans lequel un rapport de la teneur extractible en acétone (AE) à une quantité (parties en masse) du composé de formule (I) par 100 parties en masse d'une teneur de composant de caoutchouc (AE/teneur en composé (I)) dans la composition de caoutchouc de pneumatique est de 10,0 ou plus.

9. Pneumatique selon l'une quelconque des revendications 1 à 8,
dans lequel la composition de caoutchouc de pneumatique comprend au moins une résine et un rapport d'une quantité (parties en masse) de la résine à une quantité (parties en masse) de la silice, chacune par 100 parties en masse d'une teneur de composant de caoutchouc (teneur en résine/teneur en silice) dans la composition de caoutchouc de pneumatique est de 0,20 ou plus.

10. Pneumatique selon l'une quelconque des revendications 1 à 9,
dans lequel la composition de caoutchouc de pneumatique comprend au moins une résine et un rapport d'une quantité (parties en masse) de la résine à une quantité (parties en masse) du composé de formule (I), chacune par 100 parties en masse d'une teneur de composant de caoutchouc (teneur enrésine/teneur en composé (I)) dans la composition de caoutchouc de pneumatique est de 5,5 ou plus.

11. Pneumatique selon l'une quelconque des revendications 1 à 10, dans lequel le composant de pneumatique est une bande de roulement.
